# EUROPEAN PATENT APPLICATION

(11) **EP 0 813 288 A1**
(43) Date of publication of application: **17.12.1997**
(21) Application number: 96304334.4
(22) Date of filing: 10.06.1996
(51) Int. Cl.: H02K 23/28, H02K 41/035

(54) **Segmented armature winding for DC electric machine**

(71) Applicant: Yang, Tai Her, Taipei (TW)
(72) Inventor: Yang, Tai Her, Taipei (TW)
(74) Representative: Pratt, David Martin

(57) **Abstract**

A DC electric machine comprises a primary having a plurality of coils, each said coil having a first end portion, a coiled medial portion and a second end portion spaced from the first end portion, said coils being wound with said first end portions aligned along a first edge of said primary and with said second end portion aligned along a second edge of said primary opposite said first edge, a secondary having a linearly disposed series of magnetic poles of alternate polarity, said magnetic poles being supported in facing relationship to said primary, commutating means which connects to the end portions of the coils, and means for applying a DC potential of alternate positive and negative polarities to successive ones of said first commutating strips (or brushes);
whereby the driving force is produced by electromagnetic forces between said secondary and primary.

## Description

The present invention relates to DC machines, and more particularly, to a DC machine having a primary (in a rotary embodiment this might be the stator) of limited or infinite length (or circumference), and even more particularly, to a DC machine wherein a primary (or stator) is furnished with conductive segments forming non-closed loop excitation coils, each coil having two spaced-apart ends.

The armatures of traditional DC machines are generally furnished with either lap windings or wave windings. No matter which one of these two types of windings are furnished, the ending lead will return to the starting lead to form a closed loop. This constraint renders it impractical to use these traditional windings in certain situations. For example, lap windings or wave windings are impractical in linear motors because the coils begin and end at remote positions along an elongate primary core. Hence, it would be awkward to bring the ending lead back to the starting lead in order to form a closed loop.

According to the present invention, a DC machine comprises a primary having a plurality of coils, each said coil having a first end portion, a coiled medial portion and a second end portion spaced from the first end portion, said coils being wound with said first end portions aligned along a first edge of said primary and with said second portion aligned along a second edge of said primary opposite said first edge, a secondary having a linearly disposed series of magnetic poles of alternate polarity, said magnetic poles being supported in facing relationship to said primary, commutating means including a plurality of first and second conductive commutating strips (or brushes), said first and second commutating strips (or brushes) each having a length substantially equal to or slightly shorter than the length of one of said magnetic poles, said first commutating strips (or brushes) each being supported along one side of one of said magnetic poles and extending parallel to said first edge of said primary substantially coextensively with said one side of said one magnetic pole so as to contact simultaneously said first end portions of the said coils underlying said first commutating strip (or brush), said second commutating strips (or brushes) each being supported along the side of said poles opposite said aforementioned one side of said poles and extending parallel to said second edge of said primary substantially from the midpoint of said opposite side of one of said magnetic poles to the midpoint of said opposite side of the next adjacent one of said magnetic poles so as to contact simultaneously said second end portions of the ones of said coils underlying said second commutating strip (or brush); and means for applying a DC potential of alternate positive and negative polarities to successive ones of said first commutating strips (or brushes); whereby the driving force is produced by electromagnetic forces between said secondary and said primary.

The coils are typically discrete and arranged side-by-side in a series of limited or infinite length. The secondary (or rotor) commutates successive groups of the primary coils together as it moves relative thereto.

The primary may be easily extended to any length, and is thereby especially suited for use in linear DC machines.

Embodiments of the invention are described below by way of example only and with reference to the drawings in which :
Fig. 1 illustrates a parallel-connected embodiment of the present invention.
Fig. 1A is a cross-sectional view of Fig. 1, taken along lines X-X, schematically illustrating magnetic flux path.
Fig. 1B is a cross-sectional view of Fig. 1, taken along lines Y-Y, schematically illustrating magnetic flux path.
Fig. 2 illustrates an alternative series-connected embodiment of the present invention.
Fig. 3A is a cross-sectional view of Fig. 1. taken along lines X-X, illustrating a primary core.
Fig. 3B is a cross-sectional view of Fig. 1, taken along lines Y-Y, illustrating a primary core.
Fig. 4A is a cross-sectional view of Fig. 1, taken along lines X-X, illustrating another implementation of the primary core.
Fig. 4B is a cross-sectional view of Fig. 1, taken along lines Y-Y, illustrating the primary core of Fig. 4A.
Fig. 5A is a cross-sectional view of Fig. 1, taken along lines X-X, illustrating a primary core including magnetic poles in opposite polarity.
Fig. 5B is a cross-sectional view of Fig. 1, taken along lines Y-Y, illustrating the primary core of Fig. 5A.
Fig. 6 is a front view of a DC motor of the present invention adapted for use in a rotary type DC motor.
Fig. 7 is a cross-sectional view from the right side of the rotary DC embodiment shown in Fig. 6.
Fig. 8 is a cross-sectional view from the left side of Fig. 6.
Fig. 9 shows schematically a single coil as conductive segment in the DC motor of the present invention.
Fig. 10 shows schematically inter-crossed coils as conductive segments in the DC motor of the present invention.

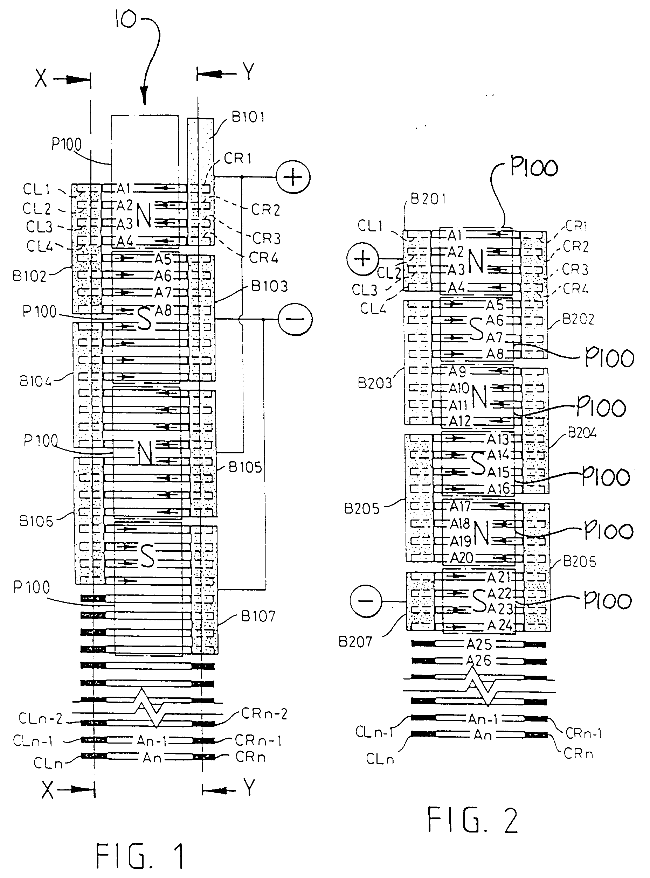

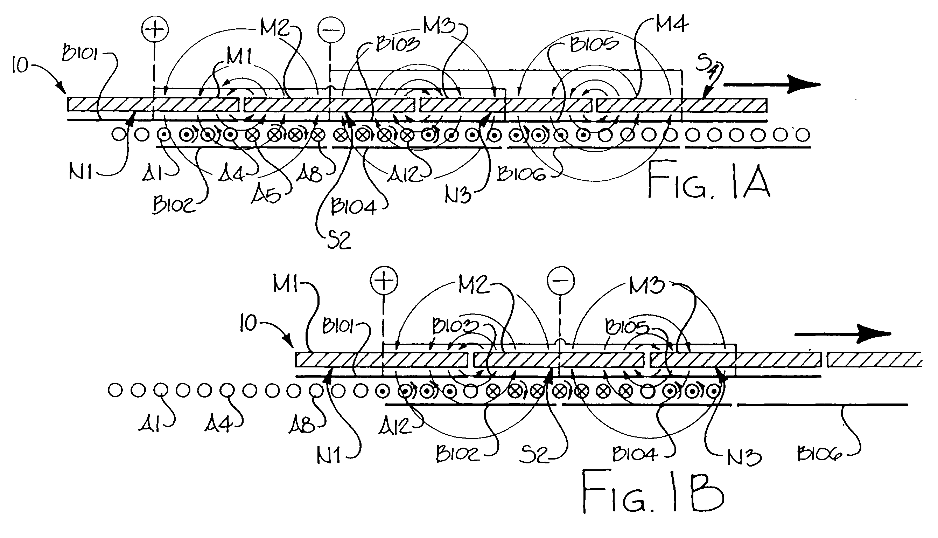

The present invention is a DC machine having a primary (in a rotary embodiment this might be the stator) which, instead of the conventional lap-windings or wave-windings, incorporates a series of conductive segments arranged side-by-side) and including a medial portion which forms an electro-magnetic coil. The medial portion is shown as a strip in Figures 1 to 5B for clarity only, and represents the coil. The conductive segments when connected, form non-closed loop current conducting armature windings each having a pair of spaced-apart ends. The invention also includes a secondary, which in a rotary embodiment would typically be the rotor, which moves relative to the primary as the result of electromagnetic excitement. The secondary is defined by a series of magnetic poles directed orthogonally with respect to the conductive segments of the primary, the poles being arranged in alternating polarities. A commutator including commutating strips (or brushes) mounted on the secondary for connecting the ends of the conductive segments together to form series or parallel excitation coils capable of inducing an electromagnetic reaction between the primary and the secondary. The commutating strips (or brushes) serve the purpose of conventional brushes, and are fixed on both sides of the secondary and move therewith to connect the ends of the conductive segments together to form circuitous electrical paths which serves as excitation coils. Any reference in this specification to the commutating strips also refers to brushes. An excitation current supplied to the commutating strips (or brushes) from an input source travels the circuitous path, thereby generating an inductive reactance which forms a magnetic coupling with the poles of this secondary to thereby drive the secondary. As the secondary moves, successive conductive segments come into contact with each commutating strip while departing conductive segments lose contact, but an advancing circuitous electrical excitation path is always maintained through successive conductive segments to continuously drive the secondary along the primary.

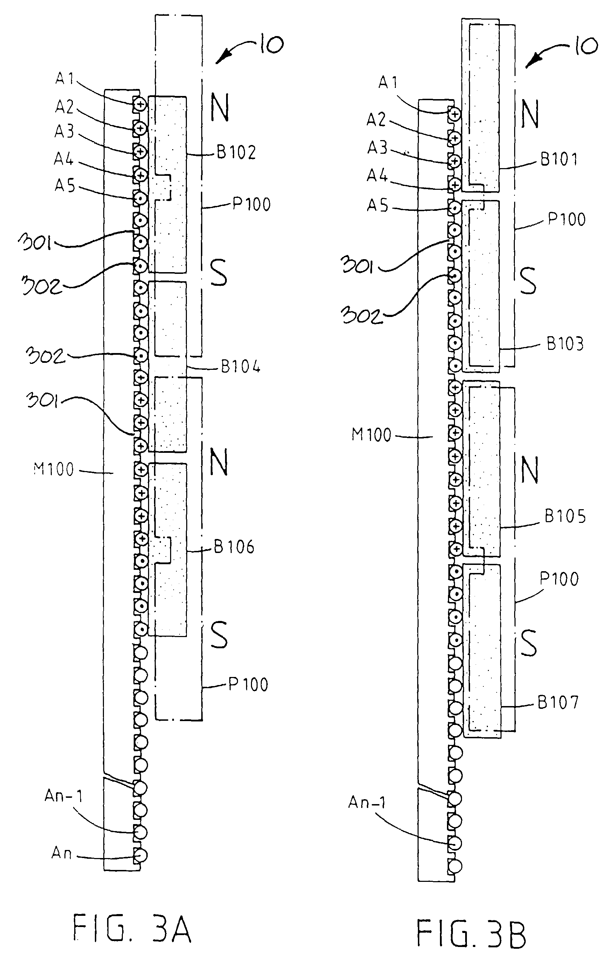

Fig. 1 illustrates a linear DC motor in accordance with a parallel-connected embodiment of the present invention. Fig. 2 illustrates a linear DC motor in accordance with a series-connected embodiment. In both of the embodiments shown in Figs. 1 and 2, the DC motor of the present invention includes a primary along which a plurality of conductive segments A1, A2.....An-1, An are arranged side-by-side. Conductive segments A1, A2.....An-1, An are preferably mounted on a primary core (schematically shown in Figs. 3A-5B), and may be embedded in respective slots in the primary core. It is a primary advantage that the number of conductive segments and the length of the primary core are not limited, and may be conveniently extended to suit any particular application. This feature is especially suited for a linear induction motor (LIM) in which an extendable length is crucial. The right and left ends of conductive segments A1, A2....An include a corresponding pair of commutating pads CL1&CR1, CL2&CR....CLn-2&CRn-2, CLn-1&CRn-1, CLn&CRn, respectively. Commutating pads CL1-CRn may be integrally formed extensions of conductive segments Al-An.

The DC motor of Figs. 1 and 2 also includes a secondary 10 adapted for electromotive movement with respect to the primary. The secondary 10 has at least one (but preferably more than one) magnetic poles P100 directed orthogonally to the primary conductive segments A1, A2....An. The magnetic poles are arranged in alternating polarities (N-S-N-S) as shown.

The DC motor also includes a commutator for commutating the conductive segments A1, A2...An of the primary to maintain a linear induction drive of the secondary 10 as the secondary 10 moves along the length of the primary. The commutator comprises a plurality of commutating strips (or brushes) B101, B102....B107 mounted on opposing sides of the secondary 10. The commutating strips (or brushes) B101, B103...B107 grouped on the right side of secondary 10 maintain slidable conductive contact with a cluster of commutating pads on the same side, for example, commutating strip B101 is in contact with commutating pads CR1-CR4. Likewise, the commutating strips (or brushes) B102, B104...B106 grouped on the left side of secondary 10 maintain slidable conductive contact with a cluster of commutating pads on that side, for example, commutating strip B102 is in contact with commutating pads CL1-CL4. In Fig. 1, commutating strips (or brushes) B102, B104...B106 on the left hand side extend between points midway of the left sides of the magnets of secondary 10 and are spaced by a gap between each pair of commutating strips (or brushes) which should not be less than the width of one commutating pad CL1...CLn. The commutating strips (or brushes) B101, B103...B105, B107 on the right side are coextensive with the right side of the magnets of secondary 10 and are spaced by a gap between each pair of commutating strips (or brushes) which should not be less than the width of one commutating pad CR1...CRn. The commutating strips (or brushes) B101...B107 are equally spaced on both sides of the secondary 10 along the length, and the commutating strips (or brushes) B102, B104, B106 on the left side are arranged 180° out of phase with the commutating strips (or brushes) B101, B103, B105, B107 on the right side. In other words, each left side commutating strip B102, B104....B106 makes contact with a cluster of conductive segments A1....An via left commutating pads CL1....CLn, while each side commutating strip B101, B103...B105, B107 makes contact with a cluster of conductive segments A1...An via right commutating pads CR1...CRn. As shown, half of the adjacent conductive segments, contacting a commutating strip on the one side of the secondary are also contacting one commutating strip on the other side of the secondary, while half are contacting another adjacent commutating strip on the other side of the secondary. As a specific example, a cluster of adjacent conductive segments A1-A3 are connected between commutating strips (or brushes) B101 and B102, while another cluster of adjacent segments A5-A8 are connected between commutating strips (or brushes) B102 and B103. The arrangement continues in this manner for all commutating strips (or brushes) along the length of secondary 10, and for all conductive segments along the length of the primary. It will be appreciated by those skilled in the art that right and left sides of the secondary, right and left commutating strips (or brushes), etc. can be interchanged from right to left without affecting the operability of the invention. Therefore, those elements can be referred to as "one" side and "opposite" side, or "first commutating strips" (or brushes) and "second commutating strips" (or brushes), etc.

Given the above-described arrangement, power can be applied to the commutating strips (or brushes) B101-B107 and the coiled portion of the conductive segments will serve as excitation coils for driving the primary.

The embodiment of Fig. 1 is a parallel-connected embodiment in which alternate right side commutating strips (or brushes), for example commutating strips (or brushes) B101 and B105, are connected to a source input of one polarity (+) while the other right side commutating strips (or brushes) B103 and B107 are connected to the other polarity (-). It will be appreciated by those skilled in the art that (+) and (-) terminals and conductors for the application of DC potential to the respective commutating strips (or brushes) constitute means for applying a DC potential of positive or negative polarity to the commutating strips (or brushes). The parallel-connected embodiment engenders multiple parallel current paths from each right side commutating strip B101, B103...B105, B107 to a left side commutating strip B102, B104...B106 and back to an adjacent right side commutating strip. In the parallel connected embodiment of Fig. 1, the extent of each secondary magnetic pole must equal the extent of one commutating strip B101-B107 (180 electrical degrees in the illustrated embodiment). As shown in Fig. 1, current return paths from the positive terminal (+) of the input source to the negative terminal (-) are provided by commutating strips (or brushes) B102, B103 etc. Current from the positive terminal flows from B101 through conductive segments A1-A4 into B102, thence through conductive segments A5-A8 into B103, whence it returns to the negative terminal.

Fig. 1A is an elevation view of the present invention corresponding to Fig. 1 except that the position of commutating strips (or brushes) B102, B104 and B106 is modified for clarity. In Figure 1A, commutating strips (or brushes) B102, B104 and B106 are shown as contacting the under sides of conductive segments A1, A2, etc., where, in practice, all commutating strips (or brushes) B101-B107 would contact the upper surfaces of conductive segments A1, A2, etc. No core for the primary is shown in Fig. 1A. The flux paths between adjacent magnetic poles of the secondary 10 are through the air. For example, flux from the north pole N1 of the magnet M1 at the left end of secondary 10 threads downward past conductive segments A1-A4 and then loops upward to enter the south pole S2 of the adjacent magnet M2, as shown by the flux lines C. Flux from magnet M1 entering magnet M2 is returned from magnet M2 to magnet M1 as is shown by the flux lines D.

In Fig. 1A, current in conductive segments A1-A4 is shown as flowing out of the plane of the paper, (i.e. from B101 to B102 in Fig. 1) and current in conductive segments A5-A12 is shown as flowing into the plane of the paper (from B102 and B104 through A5-A12 into B103). The magnetic fields surrounding conductive segments A1-A4 due to current flow are in counter clockwise direction and the field from magnet M1 to magnet M2 is also in the counter clockwise direction. Therefore, the field to the left of conductive segments A1-A4 is strengthened and the field to the right of conductive segments A1-A4 is weakened, generating a force on the secondary 10 that is directed to the right. The fields surrounding conductive segments A5-A12 due to current flow are in the clockwise direction. The fields of conductive segments A5-A8 due to current flow react with the flux entering magnet M2 from magnet M1 such that the fields to the right of conductive segments A5-A8 are weakened while the fields to the left of conductive segments A5-A8 are strengthened. The fields surrounding conductive segments A9-A12 due to current flow react with the flux entering magnet M2 from magnet M3 in the same manner as occurs with the fields of conductive segments A5-A8 and the flux from magnet M1, with the result that conductive segments A5-A12 also generate a force on secondary 10 that is directed to the right.

Fig. 1B shows the disposition of the fields of the secondary 10 and of the conductors A1-An of the primary after movement of the secondary 10 to the right from the position shown in Fig. 1A. In Fig. 1B, different conductive segments underlie the magnets of the secondary 10 and the directions of the currents in certain of the conductive segments is reversed, but the directions of the fields of the conductive segments of the primary and the magnets of the secondary are the same in Fig. 1B as in Fig. 1A. Therefore, the secondary will continue to be driven toward the right.

Fig. 2 is an alternative series-connected embodiment wherein the extent of each secondary pole P100 equals one-half the extent of each secondary pole P100 of Fig. 1. Commutating strips (or brushes) B201 and B207 at opposite ends of the left side of secondary 10 are coextensive with the left sides of the poles at the opposite ends of the secondary 10. Commutating strips (or brushes) B202, B204 and B206 on the right side of the secondary 10 and commutating strips (or brushes) B203 and B205 on the left side of the secondary each extend the lengths of two adjacent poles of the secondary. In the embodiment of Fig. 2, any commutating strip on either side may be connected to any other commutating strip on the same side to complete a zig-zag series current path back and forth across the clusters of conductive segments A1-An, thereby serving to drive the primary. For example, if an input source of one polarity (+) is applied as shown to commutating strip B201, and an input source of another polarity (-) is applied to commutating strip B207, a zig-zag series current path will be created from commutating strip B201 across conductive segments A1-A4 to commutating strip B202, then back across conductive segments A5-A8 to commutating strip B203, and so on to commutating strip B207.

In either of the above-described embodiments of Figs. 1 and 2, as the secondary 10 continues to move along the primary, successive conductive segments A1-An come into contact with each commutating strip B101-B107 (B201-B207) while departing conductive segments lose contact, but the circuitous electrical excitation paths are always maintained through successive conductive segments, and the secondary is continuously driven along the primary.

In both of the above parallel and series connected linear DC motor embodiments of Figs. 1 and 2, the commutating angle is adjustable from a lagging angle to a leading angle by altering the dimensions and/or spacing of the commutating strips (or brushes) B101-B107 (B201-B208) or conductive segments A1-An, or the input source or secondary pole polarities.

In addition, these leading or lagging angle adjustments can be utilised to adjust the magnetomotive source between the primary and secondary. Therefore, the present invention is especially suitable to be used as the driving motor of a high speed electric train.

It will then be appreciated by those skilled in the art that the above-described invention may be employed as a generator without altering the basic structure, and such use is considered to be within the scope of the invention.

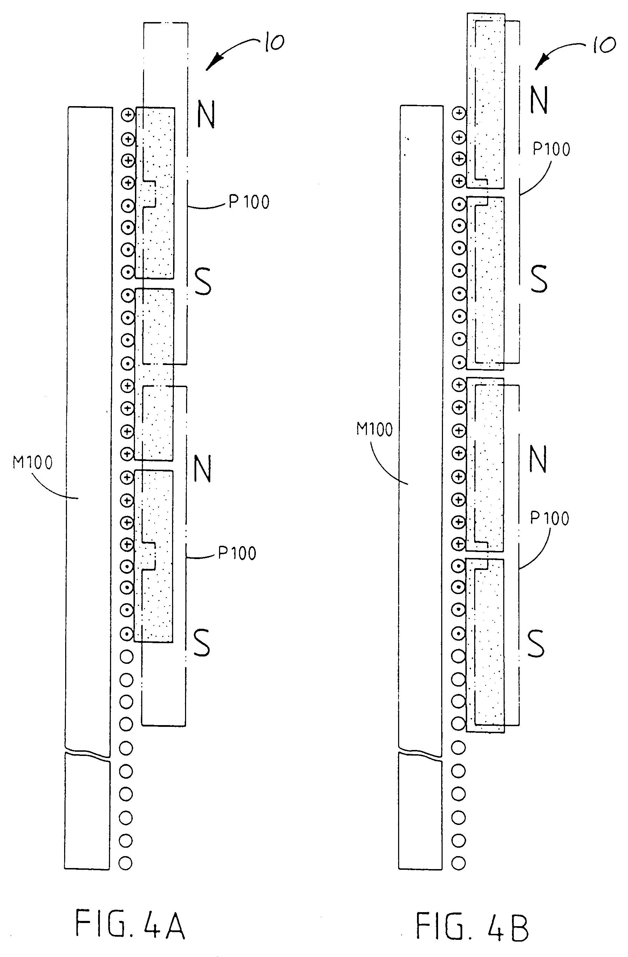

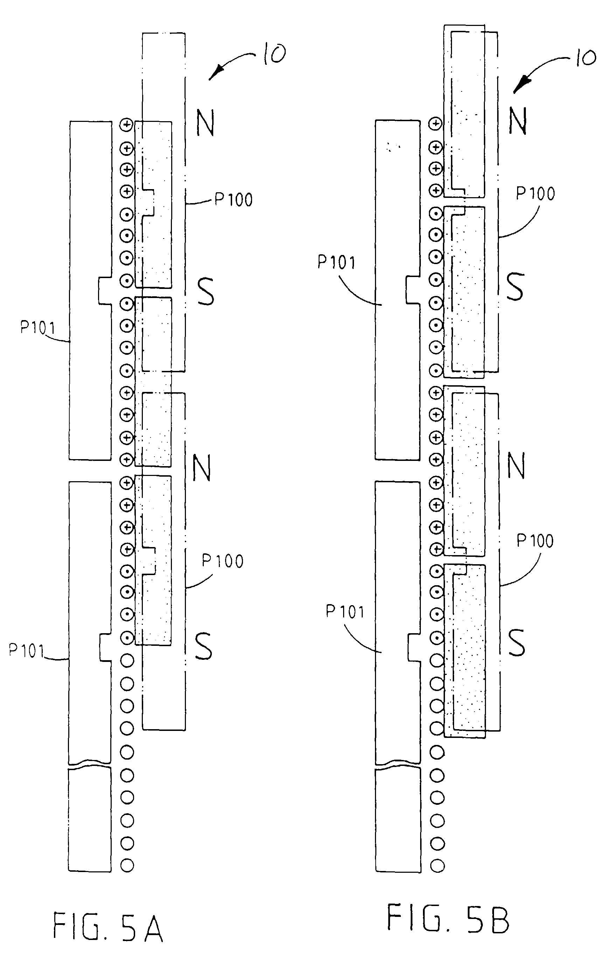

Referring to Figs. 3A, 3B, 4A, 4B, 5A, 5B, the DC motor of the present invention includes magnetic poles P100 and correspondingly installed primary core M100 to constitute a closed magnetic circuit accommodating the conducting segments A1-An therebetween. Said primary core M100 may be implemented with multiple teeth type iron cores 301 having respective slots 302 between each two teeth iron cores 301 to receive respective conductive segments A1-An therein (Figures 3A, 3B), or with a plane type coupling surface under the bottom side of the conducting segments (opposing to the side facing the magnetic poles P100 (Figs. 4A, 4B), or with magnetic poles P101 of the opposite polarity with respect to the magnetic poles P100 (Figures 5A, 5B). Conductive segments A1-An are installed on the primary core (in any one of its implementations) by means known by those skilled in the art. A typical flux path (as explained above in reference to Figs. 1A, 1B) is from a north pole of the secondary 10 across the air gap separating the primary from the secondary 10, through the primary core M100 to an area underlying the adjacent south pole of the secondary 10, across the air gap between the primary and secondary, into the south pole of the adjacent magnet. From there, the magnetic circuit would be completed through air. If no core were provided for the primary, the magnetic circuits between adjacent magnetic would be completely through air.

The conductive segments are electromagnetic coils which run substantially parallel to magnetic poles surface. Said conducting segments intersect with the motion direction at 90° angle (slighter larger or smaller angles). Said conducting segments may be implemented in different shapes (for instance, V shape) to reduce the thrust pulsation. In order to meet various requirements in different applications of the present invention, the coupling surface between conductive segments and magnetic poles may be implemented (in cross-sectional view) in linear, in V shape, U shape, W shape, M shape, and other modifications.

It will also be appreciated by those skilled in the art that the basic concept of the present invention may be incorporated in a rotary motor (of an axial type or radial type).

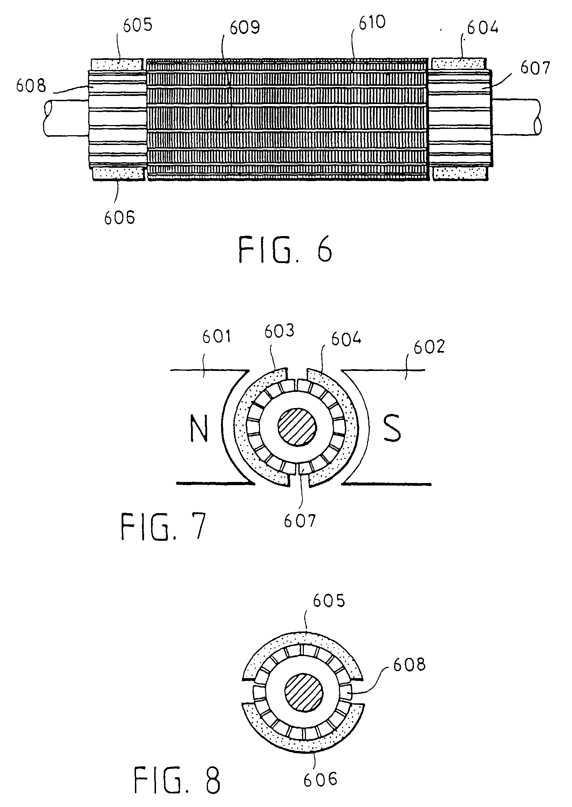

Furthermore, another embodiment of the present invention can be incorporated in a rotary DC machine (either axial or radial) using the parallelly connected armature windings of Fig. 1. Figs. 6, 7, 8 show an example of the present invention as it applies to a DC rotary motor. From these figures it can be seen that the cylindrical rotor is provided with evenly distributed armature windings 610, and the two ends of these windings are connected to their respective commutating segments 607, 608. A first commutator is provided at one end of the machine and has at least two commutating strips (or brushes) 603, 604 (one for positive power and the other for negative), the commutating strips (or brushes) being separated by an angle of less than 180°. The angular distance between the two commutating strips (or brushes) 603 and 604 should be greater than one commutating segment 607 and 608 to prevent the windings from short circuiting. A second commutator is provided at the other end of the machine and has at least two commutating strips (or brushes) 605, 606 (one for positive power and the other for negative), the commutating strips (or brushes) being separated by an angle of less than 180°. Again, the angular distance between the two commutating strips (or brushes) 605 and 606 should be greater than one commutating segment 607 and 608 to prevent the windings from short circuiting. The commutating strips (or brushes) 605 and 606 of the second commutator should be located 90° out of phase with the commutating strips (or brushes) 603 and 604 of the first commutator.

It will be appreciated by those skilled in the art, that the rotor may be of cylindrical, disk or cone type.

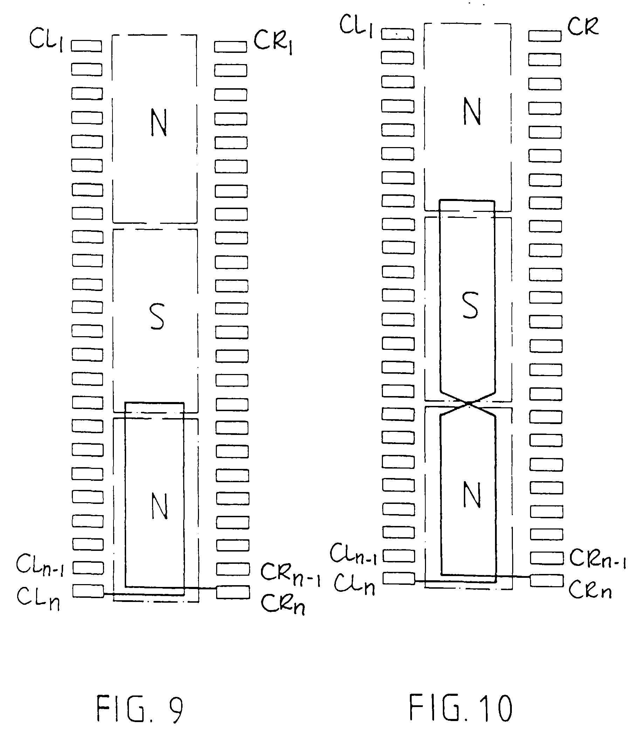

Each conducting segment A1-An includes one of a plurality of coils, maintaining the principle of two spaced-apart ends of said conducting segments. Figs. 9 and 10 schematically show an example of a single coil and intercrossed coils, respectively. Spaced-apart ends of the coils are connected to the respective commutative pads CLn and CRn.

## Claims

1. A DC electric machine comprising
a primary having a plurality of coils, each said coil having a first end portion, a coiled medial portion and a second end portion spaced from the first end portion,
said coils being wound with said first end portions aligned along a first edge of said primary and with said second end portion aligned along a second edge of said primary opposite said first edge,
a secondary having a linearly disposed series of magnetic poles of alternate polarity,
said magnetic poles being supported in facing relationship to said primary,
commutating means including a plurality of first and second conductive commutating strips (or brushes), said first and said commutating strips (or brushes) each having a length substantially equal to or slightly shorter than the length of one of said magnetic poles,
said first commutating strips (or brushes) each being supported along one side of one of said magnetic poles and extending parallel to said first edge of said primary substantially coextensively with said one side of said one magnetic pole so as to contact simultaneously said first end portions of the said coils underlying said first commutating strip (or brush),
said second commutating strips (or brushes) each being supported along the side of said poles opposite said aforementioned one side of said poles and extending parallel to said second edge of said primary substantially from the midpoint of said opposite side of one of said magnetic poles to the midpoint of said opposite side of the next adjacent one of said magnetic poles so as to contact simultaneously said second end portions of the ones of said coils underlying said second commutating strip (or brush); and
means for applying a DC potential of alternate positive and negative polarities to successive ones of said first commutating strips (or brushes);
whereby the driving force is produced by electromagnetic forces between said secondary and primary.

2. The DC electric machine of claim 1, wherein said medial portion of the coil includes one-turn one-loop coil.

3. The DC electric machine of claim 1, wherein said medial portion of the coil includes multi-turns one-loop coil.

4. The DC electric machine of claim 1, wherein said medial portions of the coil includes at least two inter-crossing loops.

5. The DC electric machine of claim 4, wherein said medial portion includes one turn.

6. The DC electric machine of claim 4, wherein said medial portion includes a plurality of turns.

7. The DC electric machine according to any preceding claim wherein the primary constitutes a stator.

8. The DC electric machine according to any preceding claim wherein the secondary constitutes a rotor.

9. The DC electric machine according to any one of claims 1 to 6 wherein the primary constitutes a rotor.

10. The DC electric machine according to any one of claims 1 to 6 and 9 wherein the secondary constitutes a stator.

11. The DC electric machine according to any preceding claim wherein the machine constitutes a DC electric motor.

12. The DC electric machine according to any one of claims 1 to 6 wherein the machine constitutes a DC generator.

13. The DC electric machine according to any one of claims 1 to 12 wherein the machine includes the linear electric machine style.

14. The DC electric machine according to any one of claims 1 to 12 wherein the machine includes the rotary electric machine style.

15. The DC electric machine according to any one of claims 1 to 12 wherein the machine includes the series or shunt or compound DC electric machine.

16. The DC electric machine of claim 1, wherein the relative position of said first commutating strips (or brushes) and magnetic poles, or the range of said second commutating strips (or brushes) and the midpoint between one of said magnetic poles and the next adjacent one of said magnetic poles, has advance or delay electric machine degree difference.
